# EUROPEAN PATENT APPLICATION

(11) **EP 4 333 537 A1**
(43) Date of publication of application: **06.03.2024**
(21) Application number: 22193120.7
(22) Date of filing: 31.08.2022
(51) Int. Cl.: H04W 72/542, H04W 24/10, H04W 24/02, H04W 84/12, H04W 36/06

(54) **A METHOD FOR SELECTING A WIRELESS CHANNEL TO PREVENT INTERFERENCES**

(71) Applicant: Advanced Digital Broadcast S.A., 1293 Bellevue (CH)
(72) Inventor: MACUGOWSKI, Adam, 65-119 Zielona Gora (PL)
(74) Representative: Kancelaria Eupatent.pl Sp. z.o.o

(57) **Abstract**

A method for selecting a wireless channel for communication between a station (STA1-STA4) and an access point (AP1) in a wireless ecosystem, the method comprising: prior to beginning regular transmission, scanning (301) the wireless spectrum by the station (STA1-STA4) to create a station-specific channel noise report that includes information on at least one channel and corresponding noise detected within that channel by the station (STA1-STA4); sending (302), by the station (STA1-STA4) the station-specific channel noise report to the access point (AP1); scanning (303) the wireless spectrum by the access point (AP1) to create an accesspoint-specific channel noise report that includes information on at least one channel and corresponding noise detected within that channel by the access point (AP1); selecting (304) by the access point (AP1) the channel that provides the sufficient wireless link conditions for communication between the access point (AP1) and the station (STA1-STA4), based on the station-specific channel noise report and the accesspoint-specific channel noise report; and starting (305) regular transmission over the selected channel between the access point (AP1) and the station (STA1-STA4).

## Description

### TECHNICAL FIELD

The present invention relates to a method for selecting a wireless channel, the method adapted to prevent interferences.

### BACKGROUND

Typical wireless networks offer a plurality of channels for communicating between devices. For example, 5 GHz Wi-Fi network offers more than 20 channels for communication.

In typically used Wi-Fi spectrum management methods, an access point (AP) may use adaptive channel selection to determine an optimum quality channel via which it can communicate with a mobile station (STA). For example, this type of adaptive channel selection is disclosed in US10154502B2. In the method of US10154502B2, in addition to determining channel and spectrum availability by the AP, the AP is also using the STA to determine link quality metrics and QoS information from the established link.

However, in a dense environment, the AP cannot scan all the locations in the wireless ecosystem - some remote station may be affected by an interferer or noise source, which is not seen by the AP or by the currently transmitting station.

### SUMMARY OF THE INVENTION

Therefore, there is a need to provide an improved method for selecting a wireless channel to prevent at least some interferences which were not effectively prevented by the methods known so far.

The object of the invention is a method for selecting a wireless channel for communication between a station and an access point in a wireless ecosystem. The method comprises, prior to beginning regular transmission, scanning the wireless spectrum by the station to create a station-specific channel noise report that includes information on at least one channel and corresponding noise detected within that channel by the station; sending, by the station the station-specific channel noise report to the access point; scanning the wireless spectrum by the access point to create an accesspoint-specific channel noise report that includes information on at least one channel and corresponding noise detected within that channel by the access point; selecting by the access point the channel that provides the sufficient wireless link conditions for communication between the access point and the station, based on the station-specific channel noise report and the accesspoint-specific channel noise report; and starting regular transmission over the selected channel between the access point and the station.

The station-specific channel noise report may contain one of: the least noisy channel and a corresponding noise indicator; a list of channels wherein the noise is below a predetermined threshold; a list of channels wherein the noise is above a predetermined threshold.

The step of scanning wireless spectrum by the station can be performed periodically.

The accesspoint-specific channel noise report may contain one of: the least noisy channel and a corresponding noise indicator; a list of channels wherein the noise is below a predetermined threshold; a list of channels wherein the noise is above a predetermined threshold; a list of all channels and corresponding noise level for each channel.

The method may further comprise periodically performing the channel selection procedure.

The wireless system can be a multiband system and the step of selecting by the access point the channel further comprises selecting a band of that channel.

The method may further comprise, during idle times of regular communication between the access point and the station, transmitting a channel benchmarking traffic sequence over the selected channel to keep the selected channel occupied.

The invention also relates to a station configured to operate according to the method as described herein.

The invention also relates to an access point configured to operate according to the method as described herein.

Furthermore, the invention also relates to a wireless system comprising an access point and at least one station configured to operate according to the method as described herein.

The method is based on hardware function available in modern Wi-Fi chipsets of noise sensing in whole utilized frequency band (available in both AP and STA devices).

The method according to the invention adds to the prior art the noise sensing feature which helps to find wireless channel that is free of interferers. The noise sensing is analyzing the whole Wi-Fi ecosystem area, by each of station device. It is also capable of avoiding channels that are affected by noise other than wireless transmission.

The advantage of presented method over the prior art is that the prior methods are using link budget and interfering condition data in already established wireless link on particular channel. Then, if the better conditions are found, the channel is changed to optimal. In the method according to the present invention, the sensing of the environment is done before the wireless link is established, therefore the channel selected for establishing communication is one with optimal conditions for both the access point and the station, and in general for the whole system.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually, these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### BRIEF DESCRIPTION OF DRAWINGS

The present invention is shown by means of example embodiments on a drawing, wherein:
Fig. 1 shows an example of a Wi-Fi ecosystem without external interferers;
Fig. 2 shows an example of a Wi-Fi ecosystem with external interferers;
Fig. 3 shows a channel selection procedure;
Fig. 4 shows a structure of a device that can be an access point or a station.

### DETAILED DESCRIPTION

The present invention will be described below with reference to embodiments related to a Wi-Fi system based on an IEEE 802.11 family of standards, including Wi-Fi based Mesh systems, but can be applicable to other wireless transmission systems as well, such as Bluetooth Mesh, mobile networks or vehicle communication networks.

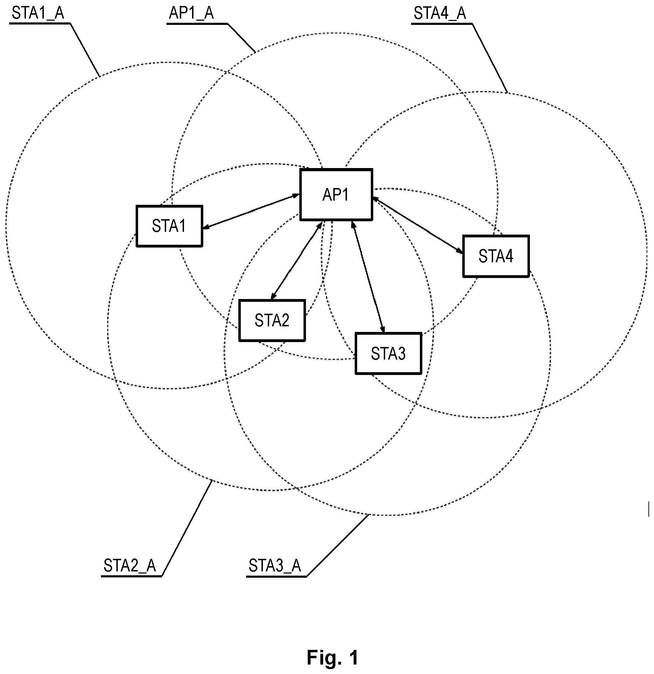

An example Wi-Fi ecosystem for which the present invention is applicable is shown in Fig. 1. The Wi-Fi ecosystem comprises an access point AP1 and a plurality of stations STA1-STA4 associated with the AP. Each of the devices has an associated a scanning area AP1_A, STA1_A-STA4_A within which the device can detect signals higher than a predetermined level. The range of the scanning area for each device corresponds substantially to its wireless communication range. Due to the different locations of the stations STA1-STA4, these stations may collectively scan for noise within a much wider area than the access point AP1 itself.

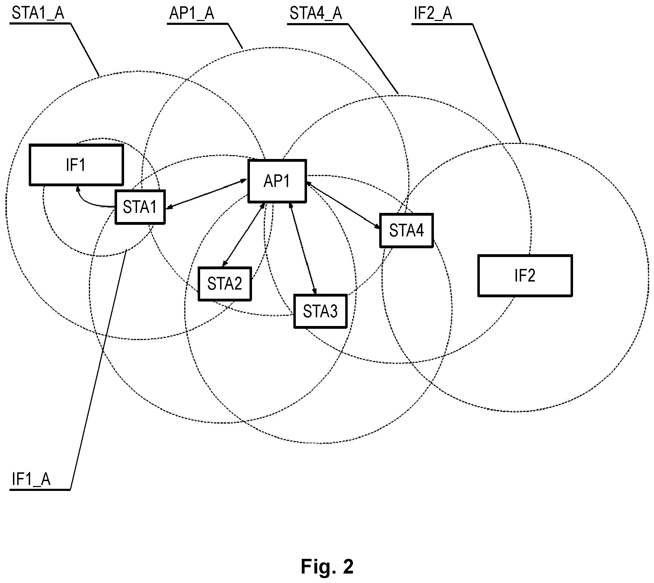

Fig. 2 shows the ecosystem of Fig. 1, wherein interferers IF1, IF2 have been introduced. The interferers are ecosystem elements that generate radio signals that occupy some of the available Wi-Fi channels. For example, the first station STA1 is affected by the first interferer IF1, such as an HDMI TV set connected by a low-quality HDMI cable that generates interference within area IF1_A within the Wi-Fi frequency band. In turn, the fourth station STA4 is affected by the second interferer IF2, such as a Wi-Fi device that is not detectable by the access point AP1 (or at least at the edge of its detection capabilities). Thanks to the noise sensing feature of the stations STA1-STA4, each station may identify interferers individually, and the whole Wi-Fi transmission system may select the most optimum channel that meets performance criteria for all devices in the system at the same time.

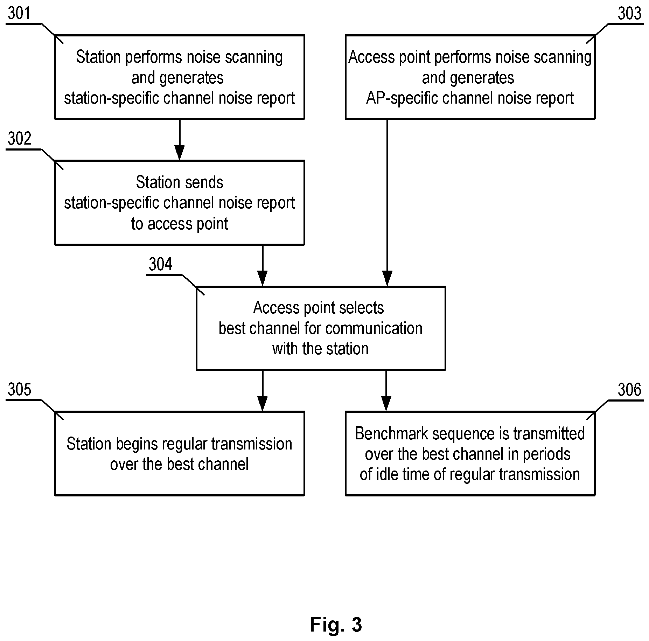

In order to select a wireless channel for communication between the access point and a particular station, the procedure shown in Fig. 3 is used. In step 301, the station performs a noise sensing function to check the whole Wi-Fi spectrum within its scanning range and creates a station-specific channel noise report that includes information on at least one channel and corresponding noise detected within that channel. For example, the station-specific channel noise report may contain:
- the least noisy channel and corresponding noise indicator (such as the absolute level of noise (e.g., in dB or other units) or simple information whether the noise is below or above a threshold that allows for communicating over that channel);
- a list of channels wherein the noise is below a predetermined threshold that allows for communicating over that channel;
- a list of channels wherein the noise is above a predetermined threshold that allows for communicating over that channel.

The noise scanning function is capable of finding not only external Wi-Fi transmitters, but also non-Wi-Fi noise sources (such as station self-noise, adjacent TV noise, HDMI cable noise that is affecting Wi-Fi band, SATA HDD etc.).

In step 302, the station sends the station-specific channel noise report to the access point. This may be performed periodically so that the access point always contains up-to-date information about noise within the system or upon request for selection of channel of communication between that station and the access point.

In step 303, the access point performs its own noise sensing function to check the whole Wi-Fi spectrum within its scanning range and creates an accesspoint-specific channel noise report that includes information on at least one channel and corresponding noise detected within that channel. For example, the accesspoint-specific channel noise report may contain:
- the least noisy channel and corresponding noise indicator (such as the absolute level of noise (e.g., in dB or other units) or simple information whether the noise is below or above a threshold that allows for communicating over that channel);
- a list of channels wherein the noise is below a predetermined threshold that allows for communicating over that channel;
- a list of channels wherein the noise is above a predetermined threshold that allows for communicating over that channel;
- a list of all channels and corresponding noise level for each channel.

In step 304, based on the station-specific channel noise report and the accesspoint-specific channel noise report, the access point selects the channel that provides sufficient wireless link conditions (e.g., sufficient for a type of regular communication requested by the station, or sufficient to meet desired quality conditions, or simply the least noisy available channel). In case there is different channel available for different station, the AP may assign number of stations to one band, and other stations to the other (assuming the AP is dual-band or tri-band concurrent).

Next, in step 305, after the best channel (and band in multiband systems) is selected, the station can start regular transmission on the selected channel, for example may start to wirelessly transmit video in a synchronized manner as defined in prior methods.

To keep the Wi-Fi transmission reliability at its best, in addition to video QoS monitoring according to the known methods, the access point and all stations may periodically perform noise sensing to verify if the current channel is still best one, i.e., repeat steps 301-304.

Moreover, in the idle time of regular transmission (i.e., when no regular data is transmitted), the access point or the station may transmit a channel benchmarking traffic sequence in step 306. The benchmarking traffic sequence can contain predetermined data or random data. It is used to keep the best channel permanently occupied to avoid a situation wherein another interfering device would occupy the channel.

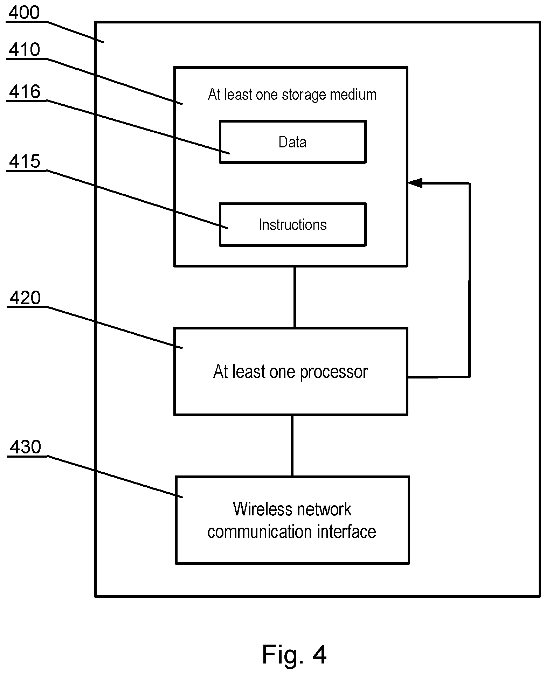

Fig. 4 shows a general structure of a wireless device, namely the access point or the station. The device 400 includes at least one non-transitory processor-readable storage medium 410 that stores at least one of processor-executable instructions 415 or data 416; and at least one processor 420 communicably coupled to the at least one non-transitory processor-readable storage medium 410. The data 416 may include the channel noise reports. A wireless network communication interface 430 is used to communicate over the wireless system. The at least one processor 420 is configured to (by executing the instructions 415 and reading the data 416) to perform the steps of Fig. 3.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only and are not exhaustive of the scope of the technical concept presented herein.

Accordingly, the scope of protection is not limited to the preferred embodiments described in the specification but is only limited by the claims that follow.

## Claims

1. A method for selecting a wireless channel for communication between a station (STA1-STA4) and an access point (AP1) in a wireless ecosystem, the method comprising:
- prior to beginning regular transmission, scanning (301) the wireless spectrum by the station (STA1-STA4) to create a station-specific channel noise report that includes information on at least one channel and corresponding noise detected within that channel by the station (STA1-STA4);
- sending (302), by the station (STA1-STA4) the station-specific channel noise report to the access point (AP1);
- scanning (303) the wireless spectrum by the access point (AP1) to create an accesspoint-specific channel noise report that includes information on at least one channel and corresponding noise detected within that channel by the access point (AP1);
- selecting (304) by the access point (AP1) the channel that provides the sufficient wireless link conditions for communication between the access point (AP1) and the station (STA1-STA4), based on the station-specific channel noise report and the accesspoint-specific channel noise report; and
- starting (305) regular transmission over the selected channel between the access point (AP1) and the station (STA1-STA4).

2. The method according to claim 1, wherein the station-specific channel noise report contains one of:
- the least noisy channel and a corresponding noise indicator;
- a list of channels wherein the noise is below a predetermined threshold;
- a list of channels wherein the noise is above a predetermined threshold.

3. The method according to any of previous claims, wherein the step of scanning (301) wireless spectrum by the station (STA1-STA4) is performed periodically.

4. The method according to any of previous claims, wherein the accesspoint-specific channel noise report contains one of:
- the least noisy channel and a corresponding noise indicator;
- a list of channels wherein the noise is below a predetermined threshold;
- a list of channels wherein the noise is above a predetermined threshold;
- a list of all channels and corresponding noise level for each channel.

5. The method according to any of previous claims, further comprising periodically performing the channel selection procedure (301-304).

6. The method according to any of previous claims, wherein the wireless system is a multiband system and the step of selecting (304) by the access point (AP1) the channel further comprises selecting a band of that channel.

7. The method according to any of previous claims, further comprising, during idle times of regular communication between the access point (AP1) and the station (STA1-STA4), transmitting (306) a channel benchmarking traffic sequence over the selected channel to keep the selected channel occupied.

8. A station (STA1-STA4) configured to operate according to the method of any of claims 1-7.

9. An access point (AP1) configured to operate according to the method of any of claims 1-7.

10. A wireless system comprising an access point (AP1) and at least one station (STA1-STA4) configured to operate according to the method of any of claims 1-7.
